(19) **Europäisches Patentamt / European Patent Office / Office européen des brevets**

(11) **EP 3 395 981 A1**

(12) # EUROPEAN PATENT APPLICATION
published in accordance with Art. 153(4) EPC

(43) Date of publication:
**31.10.2018 Bulletin 2018/44**

(21) Application number: **16879391.7**

(22) Date of filing: **23.12.2016**

(51) Int Cl.:
*C22C 38/04* (2006.01)     *C22C 38/06* (2006.01)
*C22C 38/02* (2006.01)     *C22C 38/00* (2006.01)
*C22C 38/38* (2006.01)     *C23C 2/06* (2006.01)
*C23C 2/40* (2006.01)     *C21D 8/02* (2006.01)

(86) International application number:
**PCT/KR2016/015154**

(87) International publication number:
**WO 2017/111524 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.12.2015   KR 20150184502**

(71) Applicant: **Posco**
**Pohang-si, Gyeongsangbuk-do 37859 (KR)**

(72) Inventors:
• **LEE, Sea-Woong**
  **Gwangyang-si**
  **Jeollanam-do 57807 (KR)**

• **LEE, Kyoo-Young**
  **Gwangyang-si**
  **Jeollanam-do 57807 (KR)**
• **RYU, Joo-Hyun**
  **Gwangyang-si**
  **Jeollanam-do 57807 (KR)**
• **LEE, Won-Hwi**
  **Gwangyang-si**
  **Jeollanam-do 57807 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **ULTRA HIGH-STRENGTH STEEL SHEET HAVING EXCELLENT HOLE EXPANDABILITY AND MANUFACTURING METHOD THEREFOR**

(57)     An aspect of the present invention comprises, by weight, 0.15-0.30% of C, 1.0-3.0% of Si, 3.0-5.0% of Mn, 0.020% or less of P, 0.010% or less of S, 0.01-3.0% of Al, 0.020% or less (0% exclusive) of N, and a balance amount of Fe and inevitable impurities, with a microstructure having retained austenite at an area fraction of 5-20% and ferrite, bainite and fresh martensite at a balance area fraction.

【Fig.1】

**Description**

[Technical Field]

The present invention relates to an ultra high-strength steel sheet having excellent hole expandability and a manufacturing method therefor.

[Background Art]

To regulate the $CO_2$ emissions of automobiles and to improve fuel efficiency, automakers are constantly demanding the lightening of automobile bodies. Here, there are contradictory aspects, in that to lighten automotive steel sheets, thicknesses of steel sheets need to be reduced, while to secure collision safety, thicknesses of the steel sheets need to be increased.

In order to resolve the contradiction, it is necessary to increase moldability of a material, while increasing strength of the material, and this is feasible through the use of various types of automotive steel sheets such as dual phase (DP) steel, transformation-induced plasticity (TRIP) steel and complex phase (CP) steel sheets, also known as advanced high strength steel (AHSS). It is possible to increase the strength of advanced high strength steel by increasing the amount of carbon or alloying elements, but considering practical aspects such as spot weldability and the like, implementable tensile strength is limited to a level of about 1200 MPa.

As another method, there is a quenching & partitioning (Q & P) method capable of securing low temperature martensite by quenching hot austenite at a temperature between a martensitic transformation start temperature $M_s$ and a martensitic transformation finish temperature $M_f$ in a heat treatment process and at the same time, securing strength and elongation by diffusing austenite stabilizing elements such as C, Mn and the like into a remainder of austenite at an appropriate temperature.

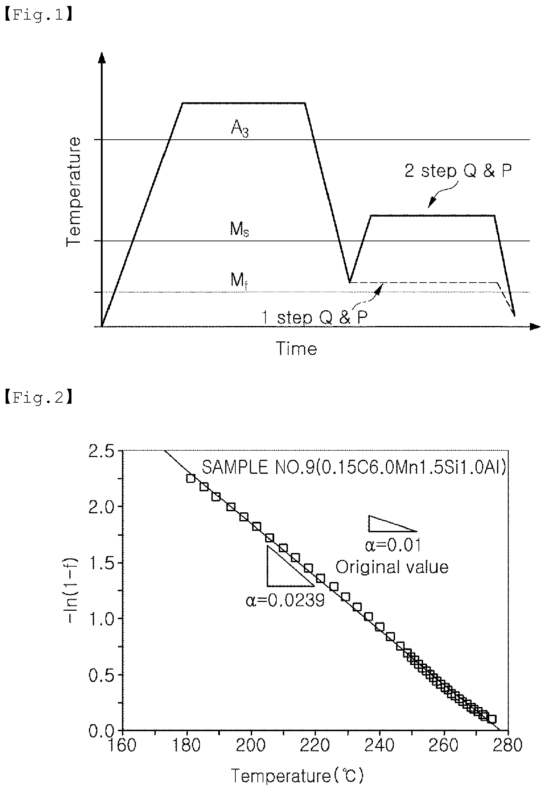

As illustrated in FIG. 1, a heat treatment process of heating steel to a temperature of $A_3$ or more and quenching the steel to a temperature below the temperature $M_s$ to thereby maintain the steel to a temperature between $M_s$ and $M_f$ is referred to as a 1 step Q & P, and another treatment process of reheating the steel to a temperature of $M_s$ or more after the quenching to thereby perform heat treatment is referred to as a 2 step Q & P.

For example, Patent Document 1 describes a method of retaining austenite using a Q & P heat treatment, but simply explains the concept the Q & P heat treatment, such that practical applications of the method are restrictive.

Meanwhile, as a component applicable to a structural member for securing collision safety, a hot press forming steel able to secure final strength thereof through quenching by direct-contact with a die subjected to water cooling after the forming thereof at high temperature has received considerable attention. However, since there are limitations such as excessive facility investment costs and increases in heat treatment and process costs, the development of a material allowing for less expensive cold press forming is required.

Therefore, there is demand for the development of an ultra high-strength steel sheet capable of cold press forming and having excellent hole expandability and a manufacturing method therefor.

(Prior Art Document)

(Patent Document 1) US Patent Publication No. 2006-0011274

[Disclosure]

[Technical Limitation]

An aspect of the present invention is to provide an ultra high-strength steel sheet capable of cold press forming and having excellent hole expandability, and a manufacturing method therefor.

Meanwhile, aspects of the present invention are not limited thereto, and may be understood from the overall description of the specification. Additional aspects of the present invention will be understood by a person having ordinary skill in the art without difficulty.

[Technical Solution]

According to an aspect of the present invention, there is provided an ultra high-strength steel sheet having excellent hole expandability, the ultra high-strength steel sheet comprising: 0.15 to 0.30% of C, 1.0 to 3.0% of Si, 3.0 to 5.0% of Mn, 0.020% or less of P, 0.010% or less of S, 0.01 to 3.0% of Al, and 0.020% or less of N (excluding 0%) by weight, with a remainder of Fe and other inevitable impurities, wherein a microstructure contains 5% to 20% by area fraction of retained austenite with a remainder including ferrite, bainite and fresh martensite.

According to another aspect of the present invention, there is provided a method of manufacturing an ultra high-strength steel sheet having excellent hole expandability, the method comprising: heating a steel slab including: 0.15 to 0.30% of C, 1.0 to 3.0% of Si, 3.0 to 5.0% of Mn, 0.020% or less of P, 0.010% or less of S, 0.01 to 3.0% of Al, and 0.020% or less of N (excluding 0%) by weight, with a remainder of Fe and other inevitable impurities, to 1000 to 1250°C; hot-rolling the heated steel slab such that a temperature at a finish-rolled outlet side thereof is 500 to 950°C to obtain a hot-rolled steel sheet; winding the hot-rolled steel sheet at a temperature of 750°C or less; cold-rolling the wound hot-rolled steel sheet at a reduction ratio of 30% to 80% to obtain a cold-rolled steel sheet; annealing the cold-rolled steel sheet in a temperature range of 750°C to 950°C; cooling the annealed cold-rolled steel sheet to a cooling end temperature of Mf to Ms-90°C; and heat-treating the cooled cold-rolled steel sheet at a temperature of Ms+100°C or more for 350 seconds or more.

In addition, the technical solution does not list all features of the present invention. Various features, advantages and effects of the present invention can be understood in more detail with reference to the following specific embodiments.

[Advantageous Effects]

According to the present invention, an ultra high-strength steel sheet having excellent hole expandability, and a manufacturing method therefor may be provided. More specifically, it exhibits excellent yield strength and hole expandability and can be suitably applied to cold press forming, and it is possible to secure a high yield strength and tensile strength after molding, allowing for replacing of hot press formed parts. Accordingly, it is feasible to replace expensive hot press formed parts with low cost cold press formed parts and to suppress $CO_2$ generation caused by high temperature molding. Thus, as an eco-friendly material, it contributes to preservation of global environment.

[Description of Drawings]

FIG. 1 is a time-temperature graph for 1 step Q & P and 2 step Q & P.

FIG. 2 is a graph illustrating the value of -ln(1-f) according to the temperature of sample No. 9

[Best Mode]

Hereinafter, preferred embodiments of the present invention will be described. However, embodiments of the present invention may be modified to have various other forms, and the scope of the present invention is not limited to the embodiments described below. Further, the embodiments of the present invention are provided to more fully explain the present invention to those skilled in the art.

The present inventors have intensively researched the development of steel sheets for cold press forming, capable of replacing conventional hot press-formed steel, thereby having mechanical properties equal to or greater than those of conventional hot press formed steel and allowing for a reduction in manufacturing cost of components. As a result of the study, the inventors have found that it is possible to provide a steel sheet having physical properties and a microstructure suitable for cold press forming, and have completed the present invention.

Hereinafter, an ultra high-strength steel sheet having excellent hole expandability according to an aspect of the present invention will be described in detail.

An ultra high-strength steel sheet having excellent hole expandability according to an aspect of the present invention comprises: 0.15 to 0.30% of C, 1.0 to 3.0% of Si, 3.0 to 5.0% of Mn, 0.020% or less of P, 0.010% or less of S, 0.01 to 3.0% of Al, and 0.020% or less of N (excluding 0%) by weight, with a remainder of Fe and other inevitable impurities, wherein a microstructure contains 5% to 20% by area fraction of retained austenite with the remainder including ferrite, bainite and fresh martensite.

First, an alloy composition of an ultra high-strength steel sheet having excellent hole expandability according to an aspect of the present invention will be described in detail. Hereinafter, a unit of each element content is % by weight.

C: 0.15 to 0.30%

Carbon (C) is an element contributing to stabilization of the retained austenite.

When the content of C is less than 0.15%, it is difficult to sufficiently secure stability of the austenite during a final heat treatment. On the other hand, when the content of C exceeds 0.30%, there are limitations that that not only the risk of occurrence of defects in a cast piece increases, but also weldability is greatly deteriorated. Therefore, the content of C is preferably, 0.15 to 0.30%.

Si: 0.1 to 3.0%

Si is an element that inhibits carbide precipitation and contributes to stabilization of retained austenite. In order to obtain the above-mentioned effect, it is preferable to add Si by the amount of 0.1% or more. On the other hand, when the content of Si exceeds 3.0%, a ferrite phase exists even at a high temperature of 900 °C or more and accordingly, there are limitations that that an austenite single phase cannot be secured at a high temperature. Therefore, the content of Si is preferably, 0.1% to 3.0%.

Mn: 3.0 to 5.0%

Mn is an element contributing to formation and stabilization of retained austenite. Mn is known to be an element widely used in transformation induced plasticity steels. In general, Mn is usually added in the amount of 3.0% for TRIP steels and in the amount of 18.0% or more for austenite single phase steels, TWIP steels. This is because that when the amount of Mn is contained in an intermediate range, a large amount of martensite is produced, thereby lowering elongation.
When the content of Mn is less than 3.0%, it is difficult to secure retained austenite at room temperature after heat treatment, and a large amount of phases such as ferrite and bainite may be contained during quenching after annealing. On the other hand, when the content of Mn exceeds 5.0%, there are limitations in that production costs are increased and a rolling load is increased during hot-rolling, thereby leading to degradations in workability. Therefore, the content of Mn is preferably 3.0 to 5.0%.

P: 0.020% or less

P is an impurity element, and when the content thereof exceeds 0.020%, weldability is lowered and the risk of low-temperature brittleness of steel is greatly increased. Therefore, the content of P is preferably 0.020% or less.

S: 0.010% or less

S is an impurity element, and when the content thereof exceeds 0.010%, ductility and weldability of a steel sheet are likely to be deteriorated. Therefore, the content of S is preferably 0.010% or less.

Al: 0.01 to 3.0%

Al is an element combined with oxygen to perform deoxidizing, and it is preferable to maintain the content of Al to 0.010% or more in order to obtain stable deoxidizing effects. However, Al is a representative ferrite region expansion element at high temperature, together with Si. When the content of Al exceeds 3.0%, a ferrite phase co-exists with an austenite phase even at a high temperature of 900 °C or more, so that an austenite single phase region which is important during a heat treatment process may be absent. Therefore, the content of Al is preferably 0.01 to 3.0%.

N: 0.020% or less (excluding 0%)

N is an effective component for stabilizing austenite, but when it exceeds 0.020%, the risk of brittleness increases greatly, so the content is limited to 0.020% or less.
In the present invention, since sufficient austenite stabilization is provided by other alloying elements, the lower limit thereof is not particularly limited, but may inevitably be included in a manufacturing process.
The remaining element of the present invention is iron (Fe). However, in ordinary manufacturing processes, impurities that are not intended may be inevitably incorporated from raw materials or the surrounding environment, so that they cannot be excluded. These impurities are not specifically mentioned in this specification, as they are known to any person skilled in the art of manufacturing.
By satisfying the above alloy composition, intended effects of the present invention may be obtained, but the steel sheet may further include at least one of 1.5% or less of Cr (excluding 0%), 0.005 to 0.3% of Ti, 0.005 to 0.3% of Nb, and 0.005 to 0.3% of V and 0.05 to 0.3% of Mo, by weight.
Cr is known as an element capable of suppressing the growth of ferrite and enhancing hardenability of a material. However, when the content of Cr exceeds 1.5%, the formation of carbides may be caused, such that stability of retained austenite may be deteriorated. Therefore, the content of Cr is preferably 1.5% or less (excluding 0%).
The Ti, Nb and V are effective elements for an increase in strength and grain size miniaturization of a steel sheet. When the content of each of Ti, Nb and V is less than 0.005%, it may be difficult to sufficiently secure such effects. When the content of each of Ti, Nb and V exceeds 0.30%, production costs can be increased and ductility can be greatly lowered due to excessive precipitates. Therefore, the content of each of Ti, Nb and V is preferably 0.005 to 0.30%.

The Mo is an element that enhances hardenability and suppresses ferrite formation, inhibits the formation of ferrite upon cooling after annealing. It is also an element contributing to an increase in strength through the formation of fine carbides. When the content of Mo is less than 0.05%, it is difficult to sufficiently secure such effects. When the content of Mo exceeds 0.3%, ferroalloy costs increase due to an excess amount of alloy. Therefore, the content of Mo is preferably 0.05 to 0.3%.

Hereinafter, the microstructure of a steel sheet according to an aspect of the present invention will be described in detail.

According to an aspect of the present invention, the microstructure of the steel sheet contains 5% to 20% by area fraction of retained austenite with the remainder including ferrite, bainite and fresh martensite.

In order to increase the strength of the steel sheet, it is important to have a martensite phase having a high dislocation density. However, due to the high dislocation density, the martensite phase exhibits limited elongation. Accordingly, by retaining austenite of 5% or more by area, it is possible to secure elongation by increasing work hardening through the formation of transformed martensite during transformation. However, when the retained austenite exceeds 20% by area, the stability of the austenite is reduced, and a yield ratio (YR) becomes 0.7 or less. Therefore, it is preferable that the area percentage is 20% or less.

At this time, the steel sheet may have transformed martensite of 15% or less by area in the tensile test.

This is because that the fraction of the transformed martensite exceeding 15% by area increases a difference in hardness between phases of fresh martensite and the transformed martensite, thereby resulting in a decrease in hole expandability.

Meanwhile, the steel sheet according to an aspect of the present invention has a yield strength of 850 MPa or more, a tensile strength of 1200 MPa or more, a hole expandability of 15% or more, and a yield ratio of 0.7 or more.

Further, the steel sheet may have a hot-dip galvanized layer formed on a surface of the steel sheet.

Hereinafter, a method of manufacturing an ultra high-strength steel sheet having excellent hole expandability according to another aspect of the present invention will be described in detail.

The method of manufacturing an ultra high-strength steel sheet having excellent hole expandability according to another aspect of the present invention may include: heating a steel slab satisfying the alloy composition described above to 1000 to 1250°C; hot-rolling the heated steel slab such that a temperature at a finish-rolled outlet side thereof is 500 to 950°C to obtain a hot-rolled steel sheet; winding the hot-rolled steel sheet at a temperature of 750°C or less; cold-rolling the wound hot-rolled steel sheet at a reduction ratio of 30% to 80% to obtain a cold-rolled steel sheet; annealing the cold-rolled steel sheet in a temperature range of 750°C to 950°C; cooling the annealed cold-rolled steel sheet to a cooling end temperature of Mf to Ms-90°C; and heat-treating the cooled cold-rolled steel sheet at a temperature of Ms+100°C or more for 350 seconds or more.

Slab Heating

The steel slab satisfying the above alloy composition is heated to 1000 to 1250°C. When the heating temperature of the steel slab is less than 1000°C, there is a defect in which a rolling load sharply increases. When the heating temperature exceeds 1250°C, energy costs increase and the amount of surface scaling increases greatly.

Hot-Rolling And Winding

The heated steel slab is hot-rolled such that a temperature on a finish-rolled outlet side thereof is 500 to 950°C to obtain a hot-rolled steel sheet, and the hot-rolled steel sheet is wound at a temperature of 750°C or less.

When the temperature at the finish-rolled outlet side is 500°C or less, the rolling load increases greatly and thus, the rolling itself becomes difficult. When the temperature at the finish-rolled outlet side exceeds 950°C, thermal fatigue of a rolling roll is greatly increased, which leads to a shortening of service life.

When the winding temperature exceeds 750°C, which is too high, this case may cause scale defects.

Cold-Rolling and Annealing

The wound hot-rolled steel sheet is cooling-rolled at a reduction ratio of 30% to 80% to obtain a cold-rolled steel sheet, and then, the cold-rolled steel sheet is annealed in a temperature range of 750°C to 900°C

When the cold-rolling reduction rate is less than 30%, accumulation energy for recrystallization during subsequent annealing may be insufficient, so that recrystallization may not occur. When the cold-rolling reduction rate exceeds 80%, rolling workability is significantly unstable and power costs greatly increase. Thus, it is preferable to perform cold-rolling at a reduction ratio of 30% to 80%.

Further, in annealing the cold-rolled steel sheet (Full Hard material), when the temperature is less than 750°C, it is infeasible to perform recrystallization. When the temperature is higher than 900°C, it causes an increase in process costs due to the high temperature. Thus, the annealing temperature is preferably, 750° C to 900°C.

Cooling and Heat Treating

After the annealed cold-rolled steel sheet is cooled to a cooling end temperature of Mf to Ms-90°C, the cooled cold-rolled steel sheet is heat-treated at Ms + 100°C or more for 350 seconds or more.

When the cooling end temperature is higher than Ms-90°C, the stability of the retained austenite is lowered due to a high area-ratio of austenite of the steel sheet after quenching, which leads to a high area-ratio of transformed martensite at the time of deformation, lowering hole expandability. On the other hand, when the cooling end temperature is lower than Mf, the entire structure is composed of fresh martensite, such that high strength may be secured but elongation may not.

The reason why a heat treatment temperature needs to be Ms+100°C or more is to ensure that the diffusion of austenite stabilizing elements such as C, Mn and the like is smoothly performed and the stability of retained austenite is secured, thereby allowing for the obtainment of elongation and hole expandability. At this time, although the upper limit of the heat treatment temperature is not particularly limited, when the temperature is higher than 500°C, carbides can be easily precipitated and the austenite stability cannot be ensured, such that the upper limit of the heat treatment temperature may be 500°C.

At this time, the temperature of Ms can be obtained by using the following relational expression (1).

$$[\text{Relational Expression 1}] \quad M_S = 547.6 - 596.9C - 28.4Mn - 13.1Si - 17.7Cr + 8.8Al$$

(Note that in the above-mentioned relational expression 1, each element symbol represents the content of each element as weight%, and the unit of Ms is °C. In a case in which the corresponding element was not contained, the content was calculated as 0).

[Table 1]

| Sample No. | C | Mn | Si | Cr | Al |
|---|---|---|---|---|---|
| 1 | 0.05 | 5.00 | 1.00 | - | - |
| 2 | 0.10 | 4.00 | 1.00 | - | - |
| 3 | 0.10 | 5.00 | 1.00 | - | - |
| 4 | 0.10 | 6.00 | 1.00 | - | - |
| 5 | 0.10 | 6.00 | - | - | - |
| 6 | 0.10 | 6.00 | 1.50 | - | |
| 7 | 0.12 | 6.00 | 1.00 | - | 1.50 |
| 8 | 0.14 | 1.50 | 1.50 | - | - |
| 9 | 0.15 | 6.00 | 1.50 | - | 1.00 |
| 10 | 0.15 | 6.00 | 0.50 | - | 1.50 |
| 11 | 0.15 | 6.00 | 1.50 | - | 1.80 |
| 12 | 0.16 | 5.00 | 1.00 | - | - |
| 13 | 0.16 | 6.00 | - | - | 2.00 |
| 14 | 0.15 | 4.00 | 1.6 | - | - |
| 15 | 0.24 | 4.00 | 1.2 | - | 1.00 |
| 16 | 0.24 | 4.00 | 1.2 | 0.5 | 1.00 |
| 17 | 0.24 | 4.00 | 1.2 | 1.0 | 1.00 |

In Table 1, the unit of each element content is % by weight.

As described above, the temperature of Ms is a very important condition among manufacturing conditions of the present invention. However, when a conventional Temperature of Ms is applied as it is, there is a large error, so that the relational expression 1 according to the composition of the present invention is obtained.

A dilatometer test was performed using cold-rolled samples having the composition illustrated in Table 1, and the fraction of martensite formed during cooling was determined through this test method. For the homogenization of the cold-rolled samples during the test, each sample was heated at 1000°C and cooled and then, reheated to 1000°C, five times in total. The Temperature of Ms could be obtained by plotting the fraction of martensite obtained through the dilatometer test using the following relational expression 2, and FIG. 2 is a graph illustrating a linear trend line applied to cold-rolled sample 9.

$$[\text{Relational Expression 2}] \quad -\ln(1-f) = -\alpha T + \alpha Ms$$

In the above relational expression 2, f is a fraction (area%) of martensite generated during cooling and $\alpha$ is a constant related to the transformation driving force of martensite, and T is temperature (°C).

Based on the temperature of Ms thus obtained, the relational expression 1 can be conceived by optimizing constant values corresponding to respective elements.

Meanwhile, the method further includes dipping the sample in a zinc plated bath after the heat treatment to form a hot-dip galvanized layer.

[Mode for Invention]

Hereinafter, the present invention will be described in detail with reference to concrete examples. It should be noted, however, that the following examples are intended to illustrate the present invention in more detail rather than to limit the scope of the present invention. Moreover, the scope of the present invention is determined by the matters described in claims and the matters reasonably deduced therefrom.

(Example 1)

Steels having compositions illustrated in the following Table 2 were vacuum-melted with a 30kg ingot, and then, maintained at a temperature of 1200°C for 1 hour, followed by hot-rolling to complete finish-rolling at 900°C and charging the finish-rolled steels into a preheated furnace at 600°C to be maintained for 1 hour. Thereafter, the steels were furnace-cooled, and hot-rolled winding thereof was simulated. Next, the steels were cold-rolled at a reduction ratio of 50% and subsequently, annealed at 900 C, cooled to the cooling end temperature described in Table 3, and then subjected to a reheating treatment by keeping them at the heat treatment temperature described in Table 3 for 400 seconds.

The yield strength (YS), the tensile strength (TS), the elongation (TE), the retained austenite fraction and the yield ratio (YR) of the samples were measured and illustrated in Table 3 below.

[Table 2]

| Steel Type | C | Si | Mn | Cr | P | S | Al | Nb | Ti | Mo | N | Ms (°C) |
|---|---|---|---|---|---|---|---|---|---|---|---|---|
| Inventive steel 1 | 0.15 | 1.6 | 4.0 | - | 0.01 | 0.003 | 0.04 | - | - | - | 0.004 | 323.9 |
| Inventive steel 2 | 0.24 | 1.2 | 4.0 | 1.0 | 0.01 | 0.003 | 1.0 | - | - | - | 0.004 | 266.2 |
| Inventive steel 3 | 0.18 | 1.5 | 3.0 | - | 0.01 | 0.005 | 0.03 | - | - | - | 0.004 | 335.6 |
| Inventive steel 4 | 0.18 | 1.5 | 3.4 | - | 0.01 | 0.005 | 0.03 | - | - | - | 0.004 | 324.2 |
| Comparative steel 1 | 0.21 | 1.5 | 2.6 | - | 0.01 | 0.003 | 0.04 | - | - | - | 0.004 | 329.1 |
| Comparative steel 2 | 0.24 | 1.5 | 2.6 | - | 0.01 | 0.003 | 0.04 | 0.02 | - | - | 0.004 | 311.3 |
| Comparative steel 3 | 0.14 | 1.0 | 7 | - | 0.01 | 0.003 | 0.03 | 0.04 | 0.06 | 0.25 | 0.004 | 252.4 |
| Comparative steel 4 | 0.14 | 1.0 | 9 | - | 0.01 | 0.004 | 0.04 | 0.04 | 0.03 | - | 0.004 | 195.7 |

In Table 2, the unit of each element content is % by weight.

[Table 3]

| Classification | | Cooling End Temperature (°C) | Ms-90°C | Heat Treatment Temperature (°C) | YS (MPa) | TS (MPa) | TE (%) | YR | Retained Austenite (area%) |
|---|---|---|---|---|---|---|---|---|---|
| Inventive Steel 1 | Inventive Example 1 | 190 | or less | 450 | 1122 | 1320 | 15.1 | 0.85 | 9.49 |
| | Inventive Example 2 | 230 | or less | 450 | 1043 | 1231 | 14.6 | 0.84 | 14.6 |
| | Comparative Example 1 | 270 | or more | 450 | 692 | 1302 | 13.0 | 0.63 | 20.5 |
| Inventive Steel 2 | Inventive Example 3 | 150 | or less | 450 | 1190 | 1376 | 16.0 | 0.86 | 17.5 |
| | Comparative Example 2 | 220 | or more | 450 | 853 | 1415 | 17.1 | 0.60 | 21.5 |
| | Comparative Example 3 | 250 | or more | 450 | 803 | 1621 | 10.0 | 0.49 | 25.0 |
| Inventive Steel 3 | Inventive Example 4 | 230 | or less | 440 | 1111 | 1220 | 14.2 | 0.91 | 5.1 |
| | Comparative Example 4 | 300 | or more | 440 | 839 | 1232 | 14.9 | 0.68 | 21.2 |
| Inventive Steel 4 | Inventive Example 5 | 230 | or less | 440 | 1127 | 1250 | 15.1 | 0.9 | 7.5 |
| | Comparative Example 5 | 300 | or more | 440 | 675 | 1409 | 10.5 | 0.48 | 20.8 |
| Comparative Steel 1 | Comparative Example 6 | 230 | or less | 440 | 490 | 1212 | 16.1 | 0.4 | 4.9 |
| | Comparative Example 7 | 270 | or more | 440 | 515 | 1244 | 14.9 | 0.4 | 15.6 |
| | Comparative Example 8 | 300 | or more | 440 | 519 | 1241 | 14.8 | 0.43 | 12.1 |

| Classification | | Cooling End Temperature (°C) | Ms-90°C | Heat Treatment Temperature (°C) | YS (MPa) | TS (MPa) | TE (%) | YR | Retained Austenite (area%) |
|---|---|---|---|---|---|---|---|---|---|
| Comparative Steel 2 | Comparative Example 9 | 220 | or less | 440 | 518 | 1290 | 15.8 | 0.69 | 3.7 |
| | Comparative Example 10 | 270 | or more | 440 | 550 | 1325 | 13.4 | 0.45 | 15.6 |
| | Comparative Example 11 | 300 | or more | 440 | 531 | 1313 | 14.7 | 0.45 | 14.3 |
| Comparative Steel 3 | Comparative Example 12 | 100 | or less | 400 | 553 | 1511 | 2.5 | 0.36 | 4.7 |
| | Comparative Example 13 | 150 | or less | 400 | 552 | 1621 | 2.6 | 0. 34 | 13.6 |
| | Comparative Example 14 | 200 | or more | 400 | 547 | 1768 | 3.6 | 0.30 | 1.85 |
| Comparative Steel 4 | Comparative Example 15 | 100 | or less | 400 | 891 | 1633 | 8.8 | 0.54 | 5.8 |
| | Comparative Example 16 | 150 | or more | 400 | 850 | 1799 | 5.7 | 0.47 | 20.7 |
| | Comparative Example 17 | 200 | or more | 400 | 1043 | 1895 | 6.2 | 0.55 | 7.3 |

As illustrated in Table 3, when a steel sheet is manufactured by the method of the present invention, it is possible to manufacture a steel sheet having a yield strength of 850 MPa or more, a tensile strength of 1.2 GPa or more, and a yield ratio of 0.7 or more.

In the case of Comparative Examples 1 to 5, in which the inventive steel was used but the cooling end temperature was Ms-90°C or more, the fraction of retained austenite exceeded 20%, failing to secure sufficient stability, and the yield ratio was below 0.7.

Further, in the case of Comparative Examples 6 to 11 using Comparative Steels 1 and 2 in which the amount of Mn was less than 3%, stability could not be ensured even in the fraction of austenite of less than 20% regardless of whether or not the cooling end temperature was satisfied, and the yield ratio was below 0.7, lower.

Meanwhile, in the case of Comparative Examples 12 to 17 using Comparative Steel 3 or 4 in which the content of Mn exceeds 5%, the tensile strength was 1500 MPa or more regardless of whether or not the cooling end temperature was satisfied, but stability could not be ensured even in the fraction of austenite of less than 20% and the yield ratio was low.

(Example 2)

Further experiments were carried out by applying the same conditions as in Example 1 and the same heat treatment temperatures as in Table 4 below. Inventive Examples 1 to 3 and Comparative Example 2 are the same as those in Example 1 above.

Mechanical properties, hole expandability and the amount of austenite before and after the tensile test were measured and illustrated in Table 4 below. By calculating a difference in austenite fraction in a system before and after the tensile test, it is possible to predict the amount of transformed martensite formed at the time of transformation.

The hole expandability is indicated by a ratio of the enlargement amount of a circular hole from at least one position thereof in a thickness direction of the hole at an edge of the hole when the circular hole is formed in a test piece and then expanded using a conical punch, to an initial hole size. The hole expandability is known as an index for evaluating stretch flangeability and is expressed by the following relational expression 3.

$$[\text{Relational Expression 3}] \quad \lambda = (Dh-Do)/Do \times 100 \ (\%)$$

where, $\lambda$ is hole expandability (%), Do is an initial hole diameter (10 mm in an embodiment of the present invention), and Dh is a hole diameter after break (mm).

The definition of the clearance at the time of punching the initial hole is also necessary in order to evaluate the hole expandability, defined as a ratio of a distance between the die and the punch to a thickness of the test piece (defined according to Relational Expression 4). In the embodiment of the present invention, a clearance of 10% was used.

$$[\text{Relation 4}] \quad C = 0.5 \times (dd-dp)/t \times 100 \ (\%),$$

where C is clearance (%), dd is an inner diameter of a punching die (mm), dp is a diameter of a punch (dp = 10 mm), and t is a thickness of the test sample.

[Table 4]

| Classification | | Cooling End Temperature (°C) | Ms - 90°C | Reheating Temperature (°C) | YS (MPa) | TS (MPa) | TE (%) | YR | Retained Austenite (area%) | | | Hole Expandability (%) |
|---|---|---|---|---|---|---|---|---|---|---|---|---|
| | | | | | | | | | Before tension (%) | After tension (%) | Variation (%) | |
| Inventive steel1 | Inventive Example 1 | 190 | or less | 450 | 1122 | 1320 | 15.1 | 0.85 | 9.49 | 0.15 | 9.34 | 23.3 |
| | Inventive Example 2 | 230 | or less | 450 | 1043 | 1231 | 14.6 | 0.84 | 14.6 | 0.6 | 14.0 | 20.1 |
| | Comparative Example 18 | 190 | or less | 190 | 1002 | 1490 | 9 | 0.67 | 2.03 | 0.01 | 2.02 | 5.6 |
| Inventive steel2 | Inventive Example 3 | 150 | or less | 450 | 1190 | 1376 | 16.0 | 0.86 | 17.5 | 4.6 | 12.9 | 18.4 |
| | Comparative Example 19 | 150 | or less | 150 | 1058 | 1750 | 7.77 | 0.6 | 3.28 | 0.01 | 3.27 | 5.2 |
| | Comparative Example 2 | 220 | or more | 450 | 853 | 1415 | 17.1 | 0.6 | 21.5 | 3.42 | 18.0 8 | 3.1 |

**EP 3 395 981 A1**

As illustrated in Table 4, in Examples 1 to 3, the retained austenite after heat treatment was 5% or more by area, and transformed martensite in the tensile test was 15% or less by area.

However, in Comparative Examples 18 and 19, not only elongation was reduced due to the fraction of retained austenite being less than 5% but hole expandability of 15% or more was not secured.

Further, in the case of Comparative Example 2, it is possible to secure excellent elongation due to a large amount of unstable retained austenite at a cooling termination temperature of Ms-90° C or more, the fraction of transformed martensite at the time of transformation was over 15%, resulting in low hole expandability.

While exemplary embodiments have been shown and described above, it will be apparent to those skilled in the art that modifications and variations could be made without departing from the scope of the invention as defined by the appended claims.

**Claims**

1.  An ultra high-strength steel sheet having excellent hole expandability, the ultra high-strength steel sheet comprising: 0.15 to 0.30% of C, 1.0 to 3.0% of Si, 3.0 to 5.0% of Mn, 0.020% or less of P, 0.010% or less of S, 0.01 to 3.0% of Al, and 0.020% or less of N (excluding 0%) by weight, with a remainder of Fe and other inevitable impurities, wherein a microstructure contains 5% to 20% by area fraction of retained austenite with the remainder including ferrite, bainite and fresh martensite.

2.  The ultra high-strength steel sheet of Claim 1, wherein the steel sheet further comprises at least one of 1.5% or less of Cr (excluding 0%), 0.005 to 0.3% of Nb, 0.005 to 0.3% of V and 0.05 to 0.3% of Mo, by weight.

3.  The ultra high-strength steel sheet of Claim 1, wherein the sum of the ferrite and bainite is 20% or less by area.

4.  The ultra high-strength steel sheet of Claim 1, wherein the steel sheet has a yield strength of 850 MPa or more, a tensile strength of 1200 MPa or more, and a hole expandability of 15% or more.

5.  The ultra high-strength steel sheet of Claim 1, wherein the steel sheet has a yield ratio of 0.7 or more.

6.  The ultra high-strength steel sheet of Claim 1, wherein the steel sheet has a hot-dip galvanized layer formed on a surface of the steel sheet.

7.  The ultra high-strength steel sheet of Claim 1, wherein the steel sheet has transformed martensite of 15% or less by area in a tensile test.

8.  A method of manufacturing an ultra high-strength steel sheet having excellent hole expandability, the method comprising:

    heating a steel slab including: 0.15 to 0.30% of C, 1.0 to 3.0% of Si, 3.0 to 5.0% of Mn, 0.020% or less of P, 0.010% or less of S, 0.01 to 3.0% of Al, and 0.020% or less of N (excluding 0%) by weight, with a remainder of Fe and other inevitable impurities, to 1000 to 1250°C;
    hot-rolling the heated steel slab such that a temperature at a finish-rolled outlet side thereof is 500 to 950°C to obtain a hot-rolled steel sheet;
    winding the hot-rolled steel sheet at a temperature of 750°C or less;
    cold-rolling the wound hot-rolled steel sheet at a reduction ratio of 30% to 80% to obtain a cold-rolled steel sheet;
    annealing the cold-rolled steel sheet in a temperature range of 750°C to 950°C;
    cooling the annealed cold-rolled steel sheet to a cooling end temperature of Mf to Ms-90°C; and
    heat-treating the cooled cold-rolled steel sheet at a temperature of Ms+100°C or more for 350 seconds or more.

9.  The method of Claim 8, wherein said Ms is obtained by the following relational expression (1):

[Relational Expression 1] $M_S = 547.6-596.9C-28.4Mn-$

$13.1Si-17.7Cr+8.8Al$

(In the relational expression 1, each element symbol represents the content of each element as weight%, the unit of Ms is °C, and an element not included is calculated as 0).

10. The method of Claim 8, wherein the steel slab further comprises at least one of 1.5% or less of Cr (excluding 0%), 0.005 to 0.3% of Ti, 0.005 to 0.3% of Nb, 0.005 to 0.3% of V and 0.05 to 0.3% of Mo, by weight.

11. The method of Claim 8, further comprising: dipping the steel sheet in a galvanizing bath to form a hot-dip galvanized layer, after the heat-treating.

【Fig.1】

【Fig.2】

## INTERNATIONAL SEARCH REPORT

| International application No. |
|---|
| PCT/KR2016/015154 |

**A. CLASSIFICATION OF SUBJECT MATTER**

*C22C 38/04(2006.01)i, C22C 38/06(2006.01)i, C22C 38/02(2006.01)i, C22C 38/00(2006.01)i, C22C 38/38(2006.01)i, C23C 2/06(2006.01)i, C23C 2/40(2006.01)i, C21D 8/02(2006.01)i*

According to International Patent Classification (IPC) or to both national classification and IPC

**B. FIELDS SEARCHED**

Minimum documentation searched (classification system followed by classification symbols)

C22C 38/04; C21D 8/02; C21D 1/78; C22C 38/00; B21C 37/08; C22C 38/12; C21D 8/10; C21D 1/19; C22C 38/06; C22C 38/02; C22C 38/38; C23C 2/06; C23C 2/40

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: manganese, chrome, niobium, vanadium, molybdenum, retained austenite, ferrite, bainite, flangeability, molten zinc-plated layer

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0024903 A (THYSSENKRUPP STEEL EUROPE AG.) 03 March 2014 See paragraphs [0025]-[0030], [0033] and claims 1, 6-16. | 1-6,8,10,11 |
| A | | 7,9 |
| A | KR 10-2002-0022803 A (KAWASAKI STEEL CORPORATION) 27 March 2002 See claims 1-4. | 1-11 |
| A | JP 10-001740 A (KOBE STEEL LTD.) 06 January 1998 See paragraphs [0033]-[0038] and claims 1, 2. | 1-11 |
| A | JP 09-104921 A (NKK CORP.) 22 April 1997 See paragraphs [0027]-[0033] and claim 1. | 1-11 |
| A | JP 08-337817 A (NKK CORP.) 24 December 1996 See paragraphs [0021]-[0024] and claims 1-3. | 1-11 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 MARCH 2017 (02.03.2017) | **03 MARCH 2017 (03.03.2017)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/015154**

| Patent document cited in search report | Publication date | Patent family member | Publication date |
|---|---|---|---|
| KR 10-2014-0024903 A | 03/03/2014 | CN 103597100 A | 19/02/2014 |
| | | CN 103597100 B | 27/01/2016 |
| | | EP 2524970 A1 | 21/11/2012 |
| | | EP 2710158 A1 | 26/03/2014 |
| | | JP 2014-518945 A | 07/08/2014 |
| | | US 2014-0322559 A1 | 30/10/2014 |
| | | WO 2012-156428 A1 | 22/11/2012 |
| KR 10-2002-0022803 A | 27/03/2002 | CA 2382073 A1 | 20/12/2001 |
| | | CA 2382073 C | 22/09/2009 |
| | | CN 1145710 C | 14/04/2004 |
| | | CN 1388835 A | 01/01/2003 |
| | | EP 1293581 A1 | 19/03/2003 |
| | | EP 1293581 A4 | 09/02/2005 |
| | | EP 1293581 B1 | 30/04/2008 |
| | | JP 04608739 B2 | 12/01/2011 |
| | | JP 2001-355046 A | 25/12/2001 |
| | | KR 10-0752912 B1 | 28/08/2007 |
| | | US 2003-0051782 A1 | 20/03/2003 |
| | | US 7018488 B2 | 28/03/2006 |
| | | WO 01-96625 A1 | 20/12/2001 |
| JP 10-001740 A | 06/01/1998 | NONE | |
| JP 09-104921 A | 22/04/1997 | JP 03374659 B2 | 10/02/2003 |
| | | JP 03849625 B2 | 22/11/2006 |
| | | JP 04192537 B2 | 10/12/2008 |
| | | JP 2003-096536 A | 03/04/2003 |
| | | JP 2003-138316 A | 14/05/2003 |
| JP 08-337817 A | 24/12/1996 | JP 03307164 B2 | 24/07/2002 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060011274 A